# EUROPEAN PATENT APPLICATION

(11) **EP 4 521 731 A1**
(43) Date of publication of application: **12.03.2025**
(21) Application number: 24198426.9
(22) Date of filing: 04.09.2024
(51) Int. Cl.: H04N 5/45, H04N 21/431, H04N 21/485

(54) **DISPLAY DEVICE WITH MULTI-VIEW MODE AND OPERATING METHOD THEREOF**

(30) Priority: 08.09.2023 KR 20230119609
(71) Applicant: LG Electronics Inc., Yeongdeungpo-gu Seoul 07336 (KR)
(72) Inventor: KIM, Taegyu, 06772 Seoul (KR); SEO, Doohwan, 06772 Seoul (KR)
(74) Representative: Vossius & Partner Patentanwälte Rechtsanwälte mbB

(57) **Abstract**

A display device according to at least one of various embodiments of the present disclosure can comprise a memory; a display configured to provide a screen; and a processor configured to when a multi-view mode providing n (where n is a natural number) view screens on the screen is executed, a first list including application icons executable in each view screen is provided in one area of the screen, and when a first application icon is selected in the first list, at least one application icon that is not selected in the first list is disabled or removed according to a selection of the first application icon.

## Description

### BACKGROUND OF THE INVENTION

### 1.Field of the Invention

The present disclosure relates to a display device and an operating method thereof.

### 2. Discussion of the Related Art

Recently, the functions of terminals have become more diverse, for example, data and voice communication, taking pictures and videos through cameras, recording voices, playing music files through speaker systems, and outputting images or videos to displays.

Some terminals have added electronic game play functions or perform multimedia player functions.

As the functions of these terminals have become more diverse, they are being implemented in the form of multimedia players with complex functions, such as taking pictures or videos, playing music or video files, playing games, and receiving broadcasts.

### SUMMARY OF THE INVENTION

An object of the present disclosure is to provide a display device and an operating method thereof that improves user convenience by utilizing a multi-view mode in which screens of multiple applications are provided simultaneously on a display device employing a large screen.

A display device according to at least one of various embodiments of the present disclosure can comprise a memory; a display configured to provide a screen; and a processor configured to when a multi-view mode providing n (where n is a natural number) view screens on the screen is executed, a first list including application icons executable in each view screen is provided in one area of the screen, and when a first application icon is selected in the first list, at least one application icon that is not selected in the first list is disabled or removed according to a selection of the first application icon.

According to at least one of the various embodiments of the present disclosure, the processor configured to when the first application icon is selected from the first list, control the display to provide an application execution screen corresponding to the first application icon on a first view screen.

According to at least one of the various embodiments of the present disclosure, the processor configured to control the display to provide guide information for at least one application icon that is disabled or removed from the first list in an area on the screen.

According to at least one of the various embodiments of the present disclosure, the processor configured to disable or remove an application icon corresponding to an application that cannot be executed simultaneously with an application corresponding to the first application icon among at least one application icon that is not selected in the first list according to the selection of the first application icon.

According to at least one of the various embodiments of the present disclosure, the processor configured to group at least one application to be disabled or removed from the first list, disable and display the application icon corresponding to the grouped application around the first application icon, and remove the application icon corresponding to the grouped application from the first list.

According to at least one of the various embodiments of the present disclosure, the processor configured to if at least one application to be disabled or removed from the first list is an application that was not displayed on the screen, remove after displaying around the first application icon the application icon corresponding to the application to be disabled or removed.

According to at least one of the various embodiments of the present disclosure, the processor configured to when a selection signal is received for one of the view screens that does not provide a current application execution screen among the n view screens provided on the screen, at least one application icon among the application icons that are not selected in the first list is provided for selection.

According to at least one of the various embodiments of the present disclosure, the processor configured to when a selection signal is received for one of the view screens that does not provide a current application execution screen among the n view screens provided on the screen, at least one application icon among the application icons that are not selected in the first list is disabled or removed, and reconfigure the first list.

According to at least one of the various embodiments of the present disclosure, the processor configured to when a selection signal is received for one of the view screens that does not provide a current application execution screen among the n view screens provided on the screen, display a recommendation probability of the application icons that are not selected in the first list.

According to at least one of the various embodiments of the present disclosure, the processor configured to if the first application icon is reselected from the first list in a state where the application execution screen corresponding to the first application icon is provided through the first view screen, stop provision of the application execution screen corresponding to the first application icon on the first view screen by determining that the first application icon is deselected.

According to at least one of the various embodiments of the present disclosure, the processor configured to display application icons to be disabled or removed among the unselected application icons are displayed around the first application icon according to the selection of the first application icon when the first application icon is pointed at in the first list, and display an application execution screen corresponding to the first application icon on the first view screen when the pointed first application icon is selected.

According to at least one of the various embodiments of the present disclosure, the processor configured to display at least one of a function button and an information providing button within the first view screen.

According to at least one of the various embodiments of the present disclosure, the processor configured to arrange application icons whose recommended combination probability is greater than a threshold value in the first list, adjacent to each other, when forming the first list including a plurality of application icons.

According to at least one of the various embodiments of the present disclosure, the processor configured to further provide at least one of a second list including combinations of recommended application icons and a third list including combinations of applications that were combined during a previous multi-view mode execution, when the multi-view mode is executed.

An operating method of display device according to at least one of various embodiments of the present disclosure can comprise providing a screen; providing a list including at least one application icon, when a multi-view mode is executed; when an application icon is selected from the list, disabling or removing at least one of the application icons that are not currently executed according to the selection of the application icon from the list; and providing an application execution screen corresponding to the application icon selected from the list.

According to at least one of the various embodiments of the present disclosure, there is an advantage in that user convenience can be maximized in a display device employing a large screen.

### BRIEF DESCRIPTION OF THE DRAWINGS

FIG. 1 is a block diagram showing a configuration of a display device according to an embodiment of the present disclosure.
FIG. 2 is a block diagram of a remote control device according to an embodiment of the present disclosure.
FIG. 3 shows an actual configuration example of a remote control device according to an embodiment of the present disclosure.
FIG. 4 shows an example of using a remote control device according to an embodiment of the present disclosure.
Fig. 5 is a diagram illustrating a horizontal mode and a vertical mode of a stand-type display device according to an embodiment of the present disclosure.
Fig. 6 is a diagram illustrating an execution appearance of a multi-view mode according to an embodiment of the present disclosure.
Fig. 7 is an example of a user interface illustrated to explain a multi-view mode according to an embodiment of the present disclosure.
Fig. 8 is a drawing illustrated to explain a detailed operation of Fig. 7.
Fig. 9 is a drawing illustrated to explain a reverse operation of Fig. 8.
Fig. 10 is an example of a user interface illustrated to explain a multi-view mode according to another embodiment of the present disclosure.
Figs. 11 and 12 are examples of a user interface illustrated to explain an operation of a multi-view mode according to another embodiment of the present disclosure.
Figs. 13 to 18 are examples of a user interface illustrated to explain an operation of a multi-view mode according to another embodiment of the present disclosure.
Figs. 19 to 20 are examples of a user interface illustrated to explain a control during an operation of a multi-view mode (full screen) according to an embodiment of the present disclosure.
FIG. 21 is a flowchart illustrating an operation method of a display device according to an embodiment of the present disclosure.

### DETAILED DESCRIPTION OF THE PREFERRED EMBODIMENTS

Hereinafter, embodiments of the present disclosure will be described in detail with reference to the drawings. The suffixes "module" and "unit or portion" for components used in the following description are merely provided only for facilitation of preparing this specification, and thus they are not granted a specific meaning or function.

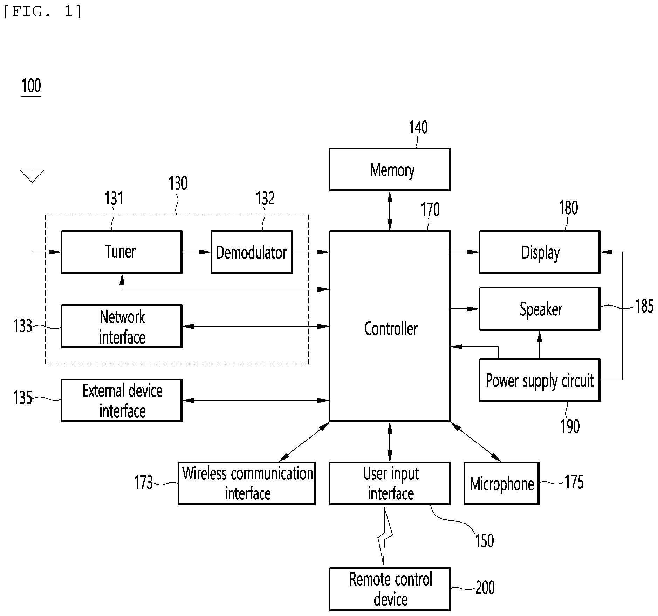

FIG. 1 is a block diagram showing a configuration of a display device according to an embodiment of the present disclosure.

Referring to FIG. 1, a display device 100 may include a broadcast receiver 130, an external device interface 135, a memory 140, a user input interface 150, a controller 170, a wireless communication interface 173, a display 180, a speaker 185, and a power supply circuit 190.

The broadcast receiver 130 may include a tuner 131, a demodulator 132, and a network interface 133.

The tuner 131 may select a specific broadcast channel according to a channel selection command. The tuner 131 may receive a broadcast signal for the selected specific broadcast channel.

The demodulator 132 may separate the received broadcast signal into an image signal, an audio signal, and a data signal related to a broadcast program, and restore the separated image signal, audio signal, and data signal to a format capable of being output.

The network interface 133 may provide an interface for connecting the display device 100 to a wired/wireless network including an Internet network. The network interface 133 may transmit or receive data to or from other users or other electronic devices through a connected network or another network linked to the connected network.

The network interface 133 may access a predetermined web page through the connected network or the other network linked to the connected network. That is, it is possible to access a predetermined web page through a network, and transmit or receive data to or from a corresponding server.

In addition, the network interface 133 may receive content or data provided by a contents provider or a network operator. That is, the network interface 133 may receive content such as movies, advertisements, games, VOD, and broadcast signals and information related thereto provided from a contents provider or a network provider through a network.

In addition, the network interface 133 may receive update information and update files of firmware provided by the network operator, and may transmit data to an Internet or contents provider or a network operator.

The network interface 133 may select and receive a desired application from among applications that are open to the public through a network.

The external device interface 135 may receive an application or a list of applications in an external device adjacent thereto, and transmit the same to the controller 170 or the memory 140.

The external device interface 135 may provide a connection path between the display device 100 and an external device. The external device interface 135 may receive one or more of images and audio output from an external device connected to the display device 100 in a wired or wireless manner, and transmit the same to the controller 170. The external device interface 135 may include a plurality of external input terminals. The plurality of external input terminals may include an RGB terminal, one or more High Definition Multimedia Interface (HDMI) terminals, and a component terminal.

The image signal of the external device input through the external device interface 135 may be output through the display 180. The audio signal of the external device input through the external device interface 135 may be output through the speaker 185.

The external device connectable to the external device interface 135 may be any one of a set-top box, a Blu-ray player, a DVD player, a game machine, a sound bar, a smartphone, a PC, a USB memory, and a home theater, but this is only an example. In addition, a part of content data stored in the display device 100 may be transmitted to a selected user among a selected user or a selected electronic device among other users or other electronic devices registered in advance in the display device 100.

The memory 140 may store programs for signal processing and control of the controller 170, and may store images, audio, or data signals, which have been subjected to signal-processed. In addition, the memory 140 may perform a function for temporarily storing images, audio, or data signals input from an external device interface 135 or the network interface 133, and store information on a predetermined image through a channel storage function.

The memory 140 may store an application or a list of applications input from the external device interface 135 or the network interface 133.

The display device 100 may play a content file (a moving image file, a still image file, a music file, a document file, an application file, or the like) stored in the memory 140 and provide the same to the user.

The user input interface 150 may transmit a signal input by the user to the controller 170 or a signal from the controller 170 to the user. For example, the user input interface 150 may receive and process a control signal such as power on/off, channel selection, screen settings, and the like from the remote control device 200 in accordance with various communication methods, such as a Bluetooth communication method, a WB (Ultra Wideband) communication method, a ZigBee communication method, an RF (Radio Frequency) communication method, or an infrared (IR) communication method or may perform processing to transmit the control signal from the controller 170 to the remote control device 200.

In addition, the user input interface 150 may transmit a control signal input from a local key (not shown) such as a power key, a channel key, a volume key, and a setting value to the controller 170.

The image signal image-processed by the controller 170 may be input to the display 180 and displayed as an image corresponding to a corresponding image signal. Also, the image signal image-processed by the controller 170 may be input to an external output device through the external device interface 135.

The audio signal processed by the controller 170 may be output to the speaker 185. Also, the audio signal processed by the controller 170 may be input to the external output device through the external device interface 135.

In addition, the controller 170 may control the overall operation of the display device 100.

In addition, the controller 170 may control the display device 100 by a user command input through the user input interface 150 or an internal program and connect to a network to download an application a list of applications or applications desired by the user to the display device 100.

The controller 170 may allow the channel information or the like selected by the user to be output through the display 180 or the speaker 185 along with the processed image or audio signal.

In addition, the controller 170 may output an image signal or an audio signal through the display 180 or the speaker 185, according to a command for playing an image of an external device through the user input interface 150, the image signal or the audio signal being input from an external device, for example, a camera or a camcorder, through the external device interface 135.

Meanwhile, the controller 170 may allow the display 180 to display an image, for example, allow a broadcast image which is input through the tuner 131 or an external input image which is input through the external device interface 135, an image which is input through the network interface or an image which is stored in the memory 140 to be displayed on the display 180. In this case, an image being displayed on the display 180 may be a still image or a moving image, and may be a 2D image or a 3D image.

In addition, the controller 170 may allow content stored in the display device 100, received broadcast content, or external input content input from the outside to be played, and the content may have various forms such as a broadcast image, an external input image, an audio file, still images, accessed web screens, and document files.

The wireless communication interface 173 may communicate with an external device through wired or wireless communication. The wireless communication interface 173 may perform short range communication with an external device. To this end, the wireless communication interface 173 may support short range communication using at least one of Bluetooth^{™}, Radio Frequency Identification (RFID), Infrared Data Association (IrDA), Ultra Wideband (UWB), ZigBee, Near Field Communication (NFC), Wi-Fi (Wireless-Fidelity), Wi-Fi(Wireless-Fidelity), Wi-Fi Direct, and Wireless USB (Wireless Universal Serial Bus) technologies. The wireless communication interface 173 may support wireless communication between the display device 100 and a wireless communication system, between the display device 100 and another display device 100, or between the display device 100 and a network in which the display device 100 (or an external server) is located through wireless area networks. The wireless area networks may be wireless personal area networks.

Here, another display device 100 may be a wearable device (e.g., a smartwatch, smart glasses or a head mounted display (HMD), a mobile terminal such as a smart phone, which is able to exchange data (or interwork) with the display device 100 according to the present disclosure. The wireless communication interface 173 may detect (or recognize) a wearable device capable of communication around the display device 100. Furthermore, when the detected wearable device is an authenticated device to communicate with the display device 100 according to the present disclosure, the controller 170 may transmit at least a portion of data processed by the display device 100 to the wearable device through the wireless communication interface 173. Therefore, a user of the wearable device may use data processed by the display device 100 through the wearable device.

The voice acquisition interface 175 can acquire audio. The voice acquisition interface 175 can include at least one microphone (not shown) and can acquire audio around the display device 100 through the microphone (not shown).

The display 180 may convert image signals, data signals, and OSD signals processed by the controller 170, or image signals or data signals received from the external device interface 135 into R, G, and B signals, and generate drive signals.

Meanwhile, since the display device 100 shown in FIG. 1 is only an embodiment of the present disclosure, some of the illustrated components may be integrated, added, or omitted depending on the specification of the display device 100 that is actually implemented.

That is, two or more components may be combined into one component, or one component may be divided into two or more components as necessary. In addition, a function performed in each block is for describing an embodiment of the present disclosure, and its specific operation or device does not limit the scope of the present disclosure.

According to another embodiment of the present disclosure, unlike the display device 100 shown in FIG. 1, the display device 100 may receive an image through the network interface 133 or the external device interface 135 without a tuner 131 and a demodulator 132 and play the same.

For example, the display device 100 may be divided into an image processing device, such as a set-top box, for receiving broadcast signals or content according to various network services, and a content playback device that plays content input from the image processing device.

In this case, an operation method of the display device according to an embodiment of the present disclosure will be described below may be implemented by not only the display device 100 as described with reference to FIG. 1 and but also one of an image processing device such as the separated set-top box and a content playback device including the display 180 and the speaker 185.

The audio output interface 185 receives a signal processed by the controller 170 and outputs it as voice.

The power supply circuit 190 supplies the corresponding power to the entire display device 100. In particular, power can be supplied to the controller 170 that can be implemented in the form of a system on chip (SOC), the display 180 for displaying images, and the audio output interface 185 for audio output.

Specifically, the power supply circuit 190 can be equipped with a converter that converts AC power into DC power and a dc/dc converter that converts the level of the DC power.

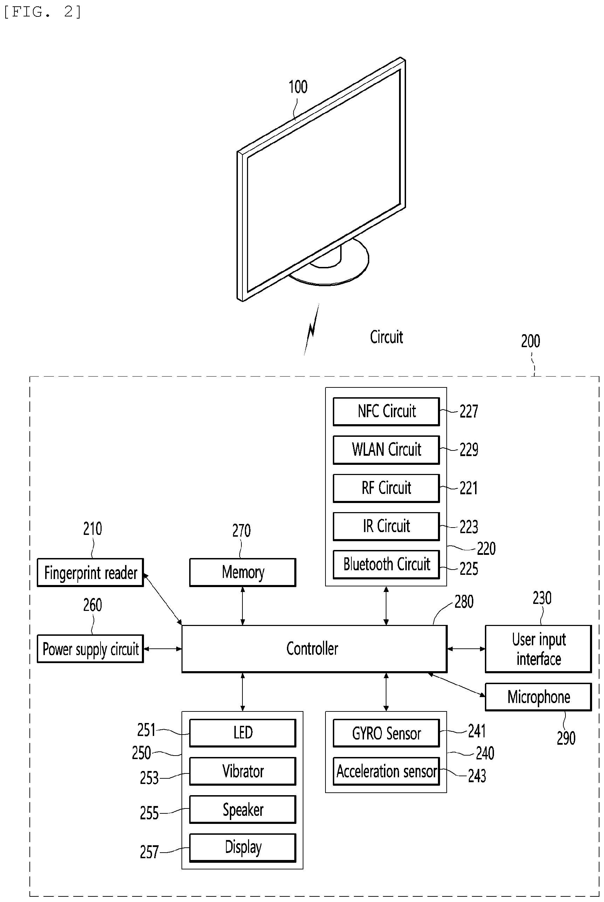

Next, a remote control device according to an embodiment of the present disclosure will be described with reference to FIGS. 2 to 3.

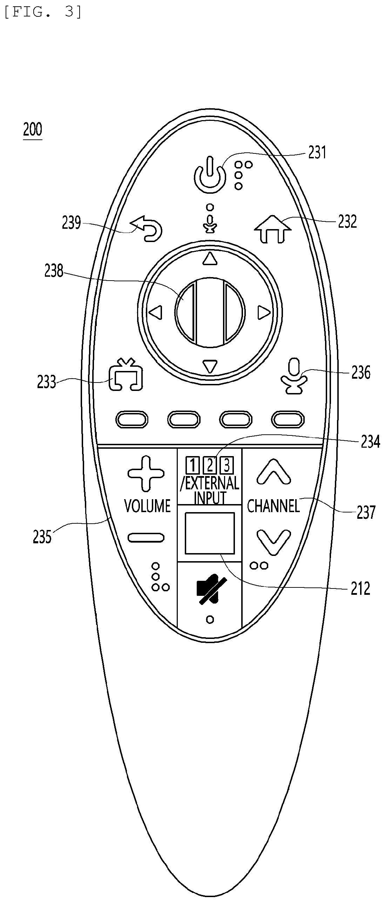

FIG. 2 is a block diagram of a remote control device according to an embodiment of the present disclosure, and FIG. 3 shows an actual configuration example of a remote control device 200 according to an embodiment of the present disclosure. First, referring to FIG. 2, the remote control device 200 may include a fingerprint reader 210, a wireless communication circuit 220, a user input interface 230, a sensor 240, an output interface 250, a power supply circuit 260, a memory 270, a controller 280, and a microphone 290.

Referring to FIG. 2, the wireless communication circuit 220 may transmit and receive signals to and from any one of display devices according to embodiments of the present disclosure described above.

The remote control device 200 may include an RF circuit 221 capable of transmitting and receiving signals to and from the display device 100 according to the RF communication standard, and an IR circuit 223 capable of transmitting and receiving signals to and from the display device 100 according to the IR communication standard. In addition, the remote control device 200 may include a Bluetooth circuit 225 capable of transmitting and receiving signals to and from the display device 100 according to the Bluetooth communication standard. In addition, the remote control device 200 may include an NFC circuit 227 capable of transmitting and receiving signals to and from the display device 100 according to the NFC (near field communication) communication standard, and a WLAN circuit 229 capable of transmitting and receiving signals to and from the display device 100 according to the wireless LAN (WLAN) communication standard.

In addition, the remote control device 200 may transmit a signal containing information on the movement of the remote control device 200 to the display device 100 through the wireless communication circuit 220.

In addition, the remote control device 200 may receive a signal transmitted by the display device 100 through the RF circuit 221, and transmit a command regarding power on/off, channel change, volume adjustment, or the like to the display device 100 through the IR circuit 223 as necessary.

The user input interface 230 may include a keypad, a button, a touch pad, a touch screen, or the like. The user may input a command related to the display device 100 to the remote control device 200 by operating the user input interface 230. When the user input interface 230 includes a hard key button, the user may input a command related to the display device 100 to the remote control device 200 through a push operation of the hard key button. Details will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back-play button 239.

The fingerprint recognition button 212 may be a button for recognizing a user's fingerprint. In one embodiment, the fingerprint recognition button 212 may enable a push operation, and thus may receive a push operation and a fingerprint recognition operation. The power button 231 may be a button for turning on/off the power of the display device 100. The home button 232 may be a button for moving to the home screen of the display device 100. The live button 233 may be a button for displaying a real-time broadcast program. The external input button 234 may be a button for receiving an external input connected to the display device 100. The volume control button 235 may be a button for adjusting the level of the volume output by the display device 100. The voice recognition button 236 may be a button for receiving a user's voice and recognizing the received voice. The channel change button 237 may be a button for receiving a broadcast signal of a specific broadcast channel. The OK button 238 may be a button for selecting a specific function, and the back-play button 239 may be a button for returning to a previous screen.

A description will be given referring again to FIG. 2.

When the user input interface 230 includes a touch screen, the user may input a command related to the display device 100 to the remote control device 200 by touching a soft key of the touch screen. In addition, the user input interface 230 may include various types of input means that may be operated by a user, such as a scroll key or a jog key, and the present embodiment does not limit the scope of the present disclosure. The sensor 240 may include a gyro sensor 241 or an acceleration sensor 243, and the gyro sensor 241 may sense information regarding the movement of the remote control device 200.

For example, the gyro sensor 241 may sense information about the operation of the remote control device 200 based on the x, y, and z axes, and the acceleration sensor 243 may sense information about the moving speed of the remote control device 200. Meanwhile, the remote control device 200 may further include a distance measuring sensor to sense the distance between the display device 100 and the display 180.

The output interface 250 may output an image or audio signal corresponding to the operation of the user input interface 230 or a signal transmitted from the display device 100. The user may recognize whether the user input interface 230 is operated or whether the display device 100 is controlled through the output interface 250.

For example, the output interface 450 may include an LED 251 that emits light, a vibrator 253 that generates vibration, a speaker 255 that outputs sound, or a display 257 that outputs an image when the user input interface 230 is operated or a signal is transmitted and received to and from the display device 100 through the wireless communication circuit 220.

In addition, the power supply circuit 260 may supply power to the remote control device 200, and stop power supply when the remote control device 200 has not moved for a predetermined time to reduce power consumption. The power supply circuit 260 may restart power supply when a predetermined key provided in the remote control device 200 is operated.

The memory 270 may store various types of programs and application data required for control or operation of the remote control device 200. When the remote control device 200 transmits and receives signals wirelessly through the display device 100 and the RF circuit 221, the remote control device 200 and the display device 100 transmit and receive signals through a predetermined frequency band.

The controller 280 of the remote control device 200 may store and refer to information on a frequency band capable of wirelessly transmitting and receiving signals to and from the display device 100 paired with the remote control device 200 in the memory 270.

The controller 280 may control all matters related to the control of the remote control device 200. The controller 280 may transmit a signal corresponding to a predetermined key operation of the user input interface 230 or a signal corresponding to the movement of the remote control device 200 sensed by the sensor 240 through the wireless communication circuit 220.

Also, the microphone 290 of the remote control device 200 may obtain a speech.

A plurality of microphones 290 may be provided.

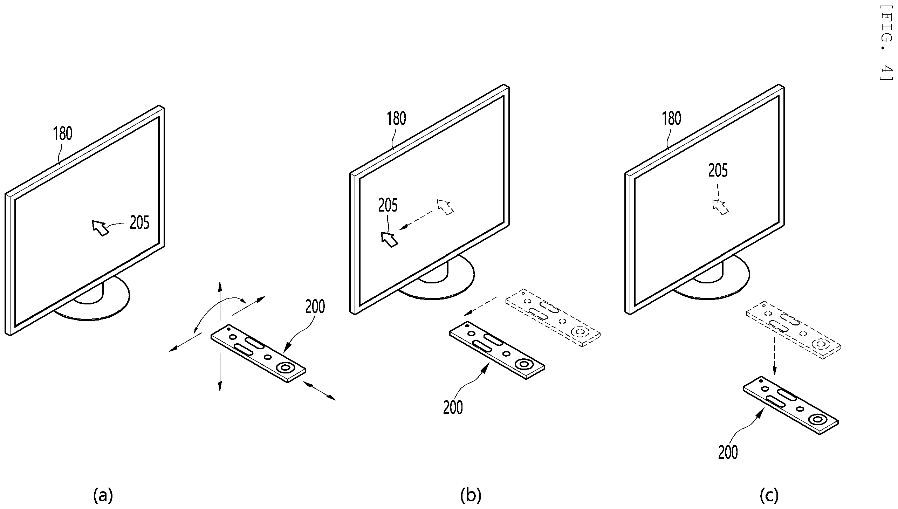

Next, a description will be given referring to FIG. 4.

FIG. 4 shows an example of using a remote control device according to an embodiment of the present disclosure.

In FIG. 4, (a) illustrates that a pointer 205 corresponding to the remote control device 200 is displayed on the display 180.

The user may move or rotate the remote control device 200 up, down, left and right. The pointer 205 displayed on the display 180 of the display device 100 may correspond to the movement of the remote control device 200. As shown in the drawings, the pointer 205 is moved and displayed according to movement of the remote control device 200 in a 3D space, so the remote control device 200 may be called a space remote control device.

In (b) of FIG. 4, it is illustrated that that when the user moves the remote control device 200 to the left, the pointer 205 displayed on the display 180 of the display device 100 moves to the left correspondingly.
Information on the movement of the remote control device 200 detected through a sensor of the remote control device 200 is transmitted to the display device 100. The display device 100 may calculate the coordinates of the pointer 205 based on information on the movement of the remote control device 200. The display device 100 may display the pointer 205 to correspond to the calculated coordinates.

In (c) of FIG. 4, it is illustrated that a user moves the remote control device 200 away from the display 180 while pressing a specific button in the remote control device 200. Accordingly, a selected area in the display 180 corresponding to the pointer 205 may be zoomed in and displayed enlarged.

Conversely, when the user moves the remote control device 200 to be close to the display 180, the selected area in the display 180 corresponding to the pointer 205 may be zoomed out and displayed reduced.

On the other hand, when the remote control device 200 moves away from the display 180, the selected area may be zoomed out, and when the remote control device 200 moves to be close to the display 180, the selected area may be zoomed in.

Also, in a state in which a specific button in the remote control device 200 is being pressed, recognition of up, down, left, or right movements may be excluded. That is, when the remote control device 200 moves away from or close to the display 180, the up, down, left, or right movements are not recognized, and only the forward and backward movements may be recognized. In a state in which a specific button in the remote control device 200 is not being pressed, only the pointer 205 moves according to the up, down, left, or right movements of the remote control device 200.

Meanwhile, the movement speed or the movement direction of the pointer 205 may correspond to the movement speed or the movement direction of the remote control device 200.

Meanwhile, in the present specification, a pointer refers to an object displayed on the display 180 in response to an operation of the remote control device 200. Accordingly, objects of various shapes other than the arrow shape shown in the drawings are possible as the pointer 205. For example, the object may be a concept including a dot, a cursor, a prompt, a thick outline, and the like. In addition, the pointer 205 may be displayed corresponding to any one point among points on a horizontal axis and a vertical axis on the display 180, and may also be displayed corresponding to a plurality of points such as a line and a surface.

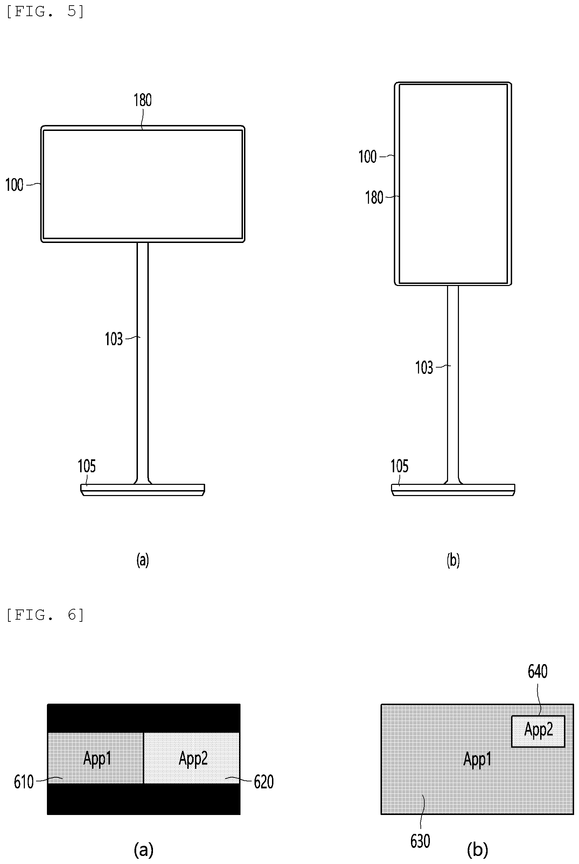

FIG. 5 (a) and FIG. 5 (b) are drawings for explaining a horizontal mode and a vertical mode of the stand-type display device according to the embodiment of the present disclosure. Referring to FIG. 5 (a) and FIG. 5 (b), a stand-type display device 100 is illustrated.

A shaft 103 and a stand base 105 may be connected to the display device 100.

The shaft 103 may connect the display device 100 and the stand base 105. The shaft 103 may be extended vertically.

The lower end of the shaft 103 may be connected to the edge of the stand base 105.

The lower end of the shaft 103 may be rotatably connected to a circumference of the stand base 105.

The display device 100 and the shaft 103 can rotate around a vertical axis with respect to the stand base 105.

The upper portion of the shaft 103 can be connected to the rear of the display device 100.

The stand base 105 can serve to support the display device 100.

The display device 100 can be configured to include the shaft 103 and the stand base 105.

The display device 100 can rotate around a point where the upper portion of the shaft 103 and the rear of the display 180 meet.

FIG. 5 (a) may indicate that the display 180 operates in a horizontal mode in which the horizontal length is greater than the vertical length, and FIG. 5 (b) may indicate that the display 180 operates in a vertical mode in which the vertical length is greater than the horizontal length.

The user may move the stand-type display device 100. That is, unlike fixed devices, the stand-type display device 100 has improved mobility, so the user is not restricted by the placement location.

As high-performance, high-spec applications are developed, the need for a large-screen display has arisen in order to properly execute the applications, and a display device 100 employing a large-screen display is being developed. As such, as the display device 100 employs a large-screen display, in addition to the single-view mode that provides only one application execution screen through the screen, a multi-view mode can be provided, thereby improving the convenience of using the device for single users or multi-users, and attempting to differentiate it from other display devices employing relatively small displays. Here, the multi-view mode can provide multiple application execution screens simultaneously on a single screen. Meanwhile, for the convenience of explanation, it is named as an application, but it can be used to mean all forms of information or data that can be output on a display device, such as content such as broadcast programs, information, etc.

This multi-view mode provides multiple split windows which are relatively smaller size than the entire screen, i.e., multi-view screen is provided on a single display screen, and at least one application execution screen can be provided on each view screen. At this time, different application execution screens can be provided on each view screen.

The terms defined in this specification are intended to help understanding of the present disclosure and for convenience of explanation, and the scope of the present disclosure should not be limited by these terms.

The multi-view mode may be named, for example, as the nth multi-view mode (where n is a natural number) according to the number of view screens. Accordingly, when the view screens are composed of two, it may be named as the first multi-view mode, when the view screens are composed of three, it may be named as the second multi-view mode, and when the view screens are composed of four, it may be named as the third multi-view mode. In the present specification, when it is described by simply naming it as the multi-view mode, it may refer to all of the first to n-1th multi-view modes or only one of them. Meanwhile, depending on the embodiment, the single-view mode may also be defined as a case where one view screen is provided in the multi-view mode. However, it is not limited thereto.

Which multi-view mode will be provided (e.g., determining the number of view screens to be provided) in the display device 100 can be determined, for example, based on settings according to user selection, the number of application icons selected from the application list described below, or default settings set by the display device 100 or a server (not shown) at the time of product release or thereafter.

At least one of the multiple view screens provided in the multi-view mode can be set as the main view screen. View screens other than the main view screen can be set as sub-view screens. In the multi-view mode, there can be at least one sub-view screen.

The application played on the main view screen can be the application that was being played immediately before the multi-view mode was executed. The application played on the main view screen can be the application that was first selected after the multi-view mode was executed. Alternatively, the application played on the main view screen may be an application selected after selecting the main view screen after executing the multi-view mode, or an application moved (for example, via drag & drop, pointing, etc.) to the main view screen by the user. Meanwhile, in the drawing described later, the application list(s) may be provided in the form of application icons for applications to be executed on the view screen. Such application icons may include text information about an application image, an application name (title), etc. The user may receive related information or perform various controls, such as execution or movement, by selecting or pointing at the application icon. However, the present invention is not limited to the above-described content. Meanwhile, in the present specification, when simply described as "selection," it may mean any one of selection, pointing, pointing followed by selection, etc.

Fig. 6 is a drawing illustrating an execution appearance of a multi-view mode according to an embodiment of the present disclosure.

Fig. 6 illustrates, for convenience, the first multi-view mode described above, i.e., a multi-view screen including two view screens.

Referring to Fig. 6 (a), the first multi-view mode includes a first view screen 610 and a second view screen 620, and the screen may be configured in a SBS (side-by-side) form.

Referring to Fig. 6 (b), the first multi-view mode includes a first view screen 630 and a second view screen 640, and the screen may be configured in a PIP (picture-in-picture) form.

The SBS-type screen configuration and the PIP-type screen configuration may be mutually switchable.

In Fig. 6 (a), the sizes of each view screen may be the same. On the other hand, in Fig. 6 (b), the sizes of each view screen may be different. Meanwhile, as in Fig. 6 (a), even in the SBS form, the sizes of all view screens may not always be the same depending on the number of view screens. For example, the second multi-view mode may be configured to include three view screens, and the size of a specific view screen may be larger or smaller than the sizes of the remaining view screens.

In the multi-view mode, the screen configuration of the multi-view screen is not specifically mentioned, but is an example of the SBS form, but is not limited thereto.

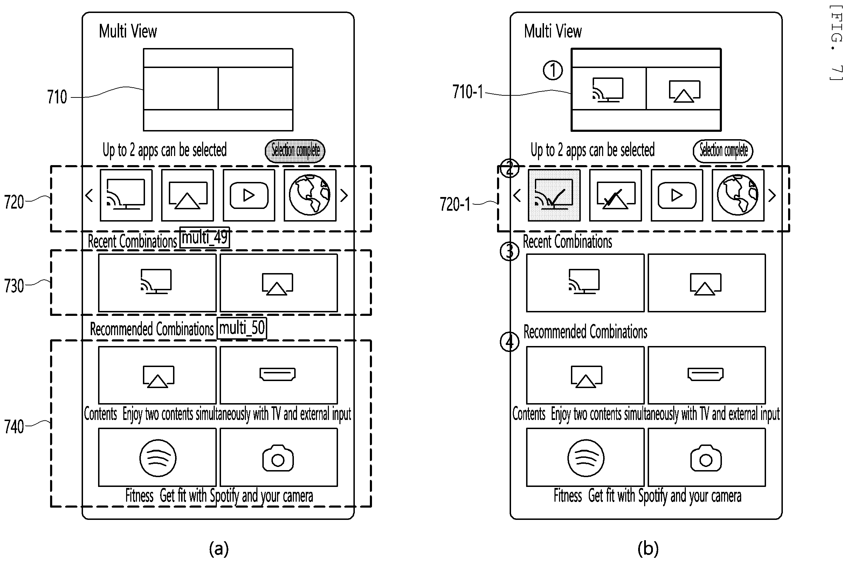

Fig. 7 is an example of a user interface illustrated to explain the multi-view mode according to an embodiment of the present disclosure.

Fig. 7 (a) may be a user interface screen initially provided by the display device 100 when the multi-view mode is executed (or requested to be executed) by the user. However, it is only an example and is not limited thereto.

Referring to Fig. 7 (a), the user interface screen for the multi-view mode may be largely divided into four areas. The first area 710 may provide an abbreviated multi-view screen. The second area 720 may provide a list (or application list) of application icon(s). When a predetermined application icon is selected from the list, the display device 100 may provide an application execution screen corresponding to the selected application icon through one of the multi-view screens of the first area 710. The third area 730 may provide a previously (or recently) executed application combination or a list thereof. Here, 'recently' may be determined in advance according to settings such as time unit, date unit, month unit, or the number of applications executed. The fourth area 740 may provide a recommended application combination or a list thereof. Similarly, when a predetermined application icon is selected in the third area 730 or the fourth area 740, an execution screen of the selected application icon or application combination may be provided through a predetermined view screen in the first area 710.

In Fig. 7 (b), two applications are selected from the application list listed in the second area 720 of Fig. 7 (a), and, depending on the selection, the corresponding application execution screen is provided on each view screen of the first area 710-1.

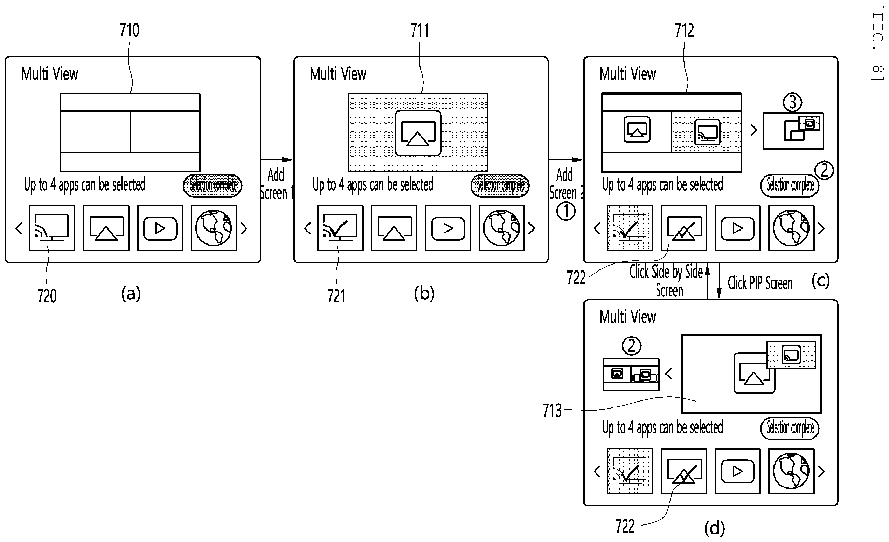

Fig. 8 is a drawing illustrating the detailed operation of Fig. 7.

Fig. 8 illustrates a process in which a multi-view screen is added according to the selection of an application icon, such as the transition process from Fig. 7 (a) to Fig. 7 (b). For convenience, Fig. 8 illustrates only the first area 710 and the second area 720.

Fig. 8 (a) can represent the same state as Fig. 7 (a), a state before application icon selection after execution of the multi-view mode.

In Fig. 8 (b), one application icon 721 is selected in the second area 720 of Fig. 7 (a), and an application execution screen representing the selected application icon is provided in the first area 710. At this time, the multi-view screen provided in the first area 710 can provide an application execution screen corresponding to the selected application icon by outputting only one view screen 711.

In Fig. 8 (c) or Fig. 8 (d), in the state of Fig. 8 (b), when the user additionally selects one application icon 722 in the second area 720, the display device 100 can provide a multi-view screen 712 or 713 including two view screens in the first area 710.

As described above, the difference in the configuration of the multi-view screen can be determined according to the settings of the display device 100, user requests, etc. For convenience, the SBS form as in Fig. 8 (c) is described as the basic form, but it is not limited thereto, and it may be switched from Fig. 8 (c) to Fig. 8 (d) or vice versa depending on the user's selection.

Meanwhile, the display device 100 provides a multi-view screen 712 as in Fig. 8 (c), but may be automatically switched to Fig. 8 (d) if a view screen of a smaller size than the first view screen is sufficient depending on the type, properties, etc. of the application icon 722 selected later. The opposite is also true.

Alternatively, the output format such as Fig. 8 (c) or Fig. 8 (d) may be determined according to the type, properties, etc. of the application icon 722 additionally selected after Fig. 8 (b).

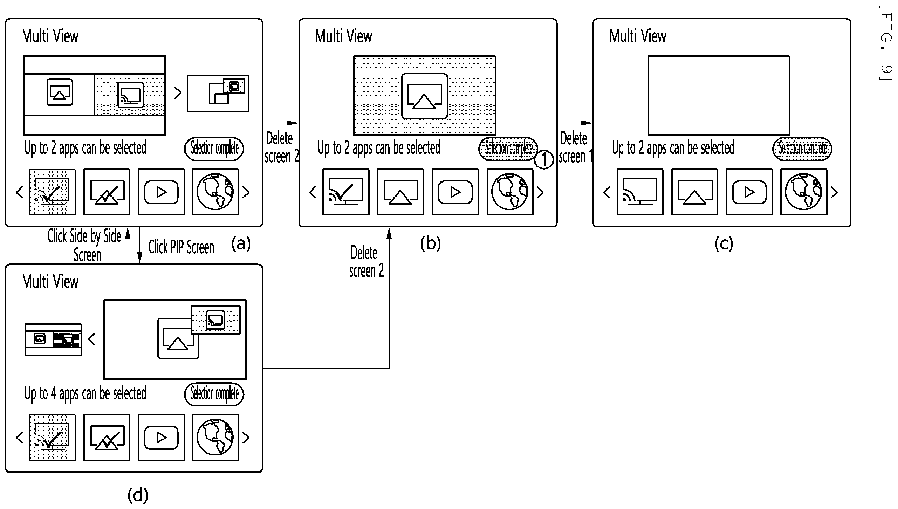

Fig. 9 is a drawing illustrating the reverse operation of Fig. 8.

That is, Fig. 9 is a drawing illustrating the screen being deleted starting from the state of Fig. 8.

Fig. 9 (a) may be the same screen as Fig. 8 (c). It is not limited thereto.

Fig. 9 (b) is a screen in which an application icon previously selected by the user in Fig. 9 (a) is reselected, i.e., deselected. This may represent the same state as Fig. 8 (b) .

Fig. 9 (c) is a screen in which the user additionally reselects and deselects the remaining previously selected application icons in Fig. 9 (b). This may represent the same state as Fig. 8 (a).

Meanwhile, Fig. 9 (a) is configured in the SBS form like Fig. 8 (c), while Fig. 9 (d) is configured in the PIP form like Fig. 8 (d), but the processing flow is the same.

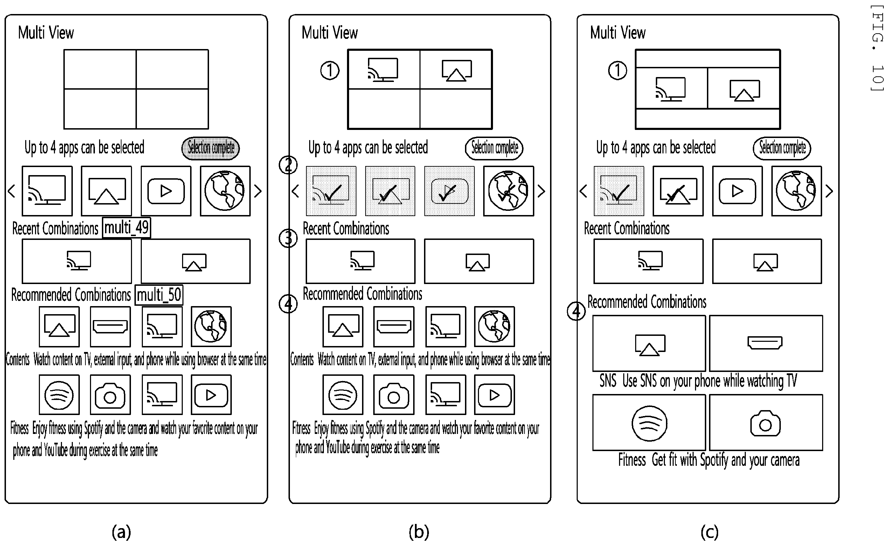

Fig. 10 is an example of a user interface illustrated to explain a multi-view mode according to another embodiment of the present disclosure.

Fig. 10 explains that the multi-view mode changes according to the user's selection of an application icon.

In Fig. 10 (a), a multi-view screen including four view screens is provided in the first area 710, and the application icon is not yet selected in the second to fourth areas 720-740.

In Fig. 10 (b), for example, four application icons are selected in the second area 720, and an application execution screen corresponding to each application icon selected is provided on each view screen of the first area 710.

Meanwhile, in Fig. 10 (c), if two application icons out of the four application icons selected in the second area 720 of Fig. 10 (b) are re-selected, the display device 100 can recognize this as deselection. Accordingly, the display device 100 can provide only application execution screens corresponding to two application icons that are not deselected, as in Fig. 10 (c) .

At this time, in Fig. 10 (c), since two application icons among the four initially selected application icons are reselected and deselected, there are two application icons that are not deselected, so instead of maintaining four view screens as in (a) and (b) of Fig. 10, it can be switched to a multi-view mode that only outputs two view screens.

Or, for example, if the state as in Fig. 10 is a preparation mode, a pre-execution mode, or a control mode of multi-view mode, and is a step for configuring a multi-view screen, if this mode is released and the multi-view mode is executed over the entire screen, it can be processed as in Fig. 10 (c), assuming that the user no longer selects an application icon. However, if this mode is still not released, it can be assumed that the user still has the intention to select an application icon or deselect a pre-selected application icon, so it can be maintained as in (a) or (b) of Fig. 10, assuming that the user still has the intention to select an application icon or deselect a pre-selected application icon.

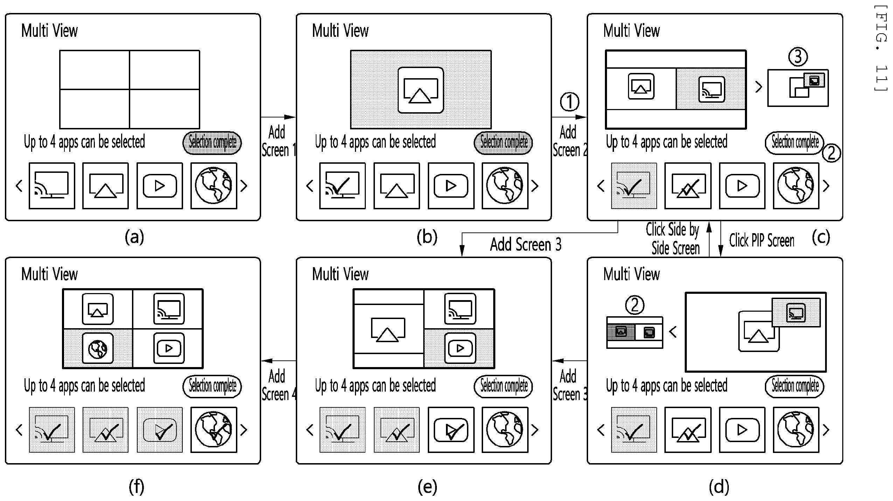

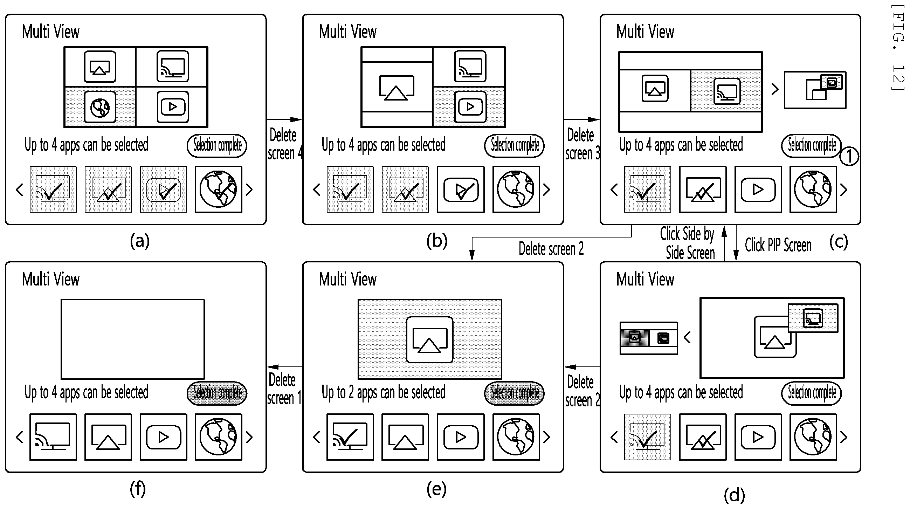

Figs. 11 and 12 are examples of user interfaces illustrated to explain the operation of the multi-view mode according to another embodiment of the present disclosure.

In Fig. 11, for convenience of explanation, only the first area 710 and the second area 710 are included, as in Figs. 8 and 9 described above, but the present invention is not limited thereto.

Figs. 11 (a) to (f) may illustrate a sequential change process of the multi-view mode.

Referring to Fig. 11 (a), four view screens may be provided in the first area 710, and a plurality of application icons may be arranged and provided in the second area 720. Fig. 11 (a) may be a user interface when the multi-view mode is initially executed.

In Fig. 11 (b), when one of a plurality of application icons arranged in the second area 720 is selected by the user, the display device 100 can provide one view screen in the first area 710 according to the selection. At this time, the provided view screen can provide an application execution screen corresponding to the selected application icon.

In (c) and (d) of Fig. 11, when one of a plurality of application icons arranged in the second area 720 is additionally selected by the user in the state of Fig. 11 (b), the display device 100 can provide one more view screen in the first area 710 according to the additional selection, that is, provide two view screens. At this time, the two provided view screens can provide application execution screens corresponding to the selected application icons, respectively.

In Fig. 11 (c), two view screens are provided in the form of SBS, and in Fig. 11 (d), two view screens are provided in the form of PIP. In the latter case, the main view screen may output an application execution screen corresponding to the first selected application icon, or vice versa.

In Fig. 11 (e), when one of a plurality of application icons arranged in the second area 720 is additionally selected (a total of three selections) by the user in the state of (c) to (d) of Fig. 11, the display device 100 may add one more view screen to the first area 710 according to the additional selection, that is, provide three view screens. At this time, application execution screens corresponding to the selected application icons may be provided on each of the three view screens provided.

In Fig. 11 (e), for convenience of explanation, three view screens are configured in the SBS form, but the present disclosure is not limited thereto and may be configured in the PIP form as Fig. 11 (d).

In Fig. 11 (f), when one of a plurality of application icons arranged in the second area 720 is additionally selected (total of four) by the user in the state of Fig. 11 (e), the display device 100 may provide four view screens by adding one more view screen to the first area 710 according to the additional selection. At this time, application execution screens corresponding to the selected application icons may be provided on each of the four view screens provided.

In Fig. 11 (f), for convenience of explanation, four view screens are configured in the SBS form, but the present disclosure is not limited thereto and may be configured in the PIP form as Fig. 11 (d).

Meanwhile, Fig. 12 explains the reverse operation of Fig. 11 described above.

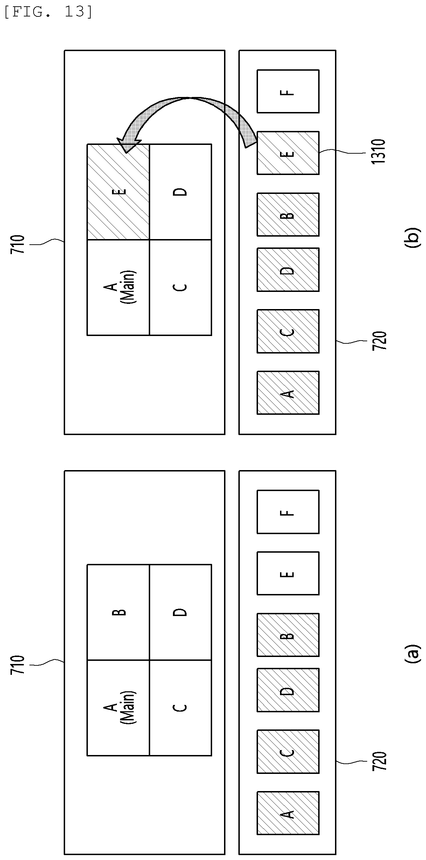

Figs. 13 to 18 are examples of user interfaces illustrated to explain the operation of a multi-view mode according to another embodiment of the present disclosure.

Figs. 13 to 18 explain the multi-view mode that changes in various ways according to a user's action on the display device 100.

FIG. 13 explains the operation of the display device 100 after all application icons to be executed on all view screens are selected.

Referring to FIG. 13 (a), when four application icons A, C, B, D are selected in the second area 720, the display device 100 can provide an application execution screen corresponding to the selected application icon on each view screen.

In Fig. 13 (b), when an application execution screen corresponding to an application icon already selected in all view screens is provided in a multi-view screen as shown in Fig. 13 (a), if one application icon (E) 1310 among new application icons that were not additionally selected is selected, processing for this is required.

In one embodiment, the display device 100 may randomly select one of all view screens and provide an execution screen of an application (E) 1310 corresponding to the newly selected application icon instead of the application (B) that was already being executed in the selected view screen. At this time, the main screen may be excluded from the randomly selected view screen.

In another embodiment, the display device 100 may not randomly select any one of the view screens, but may select a view screen that is providing an execution screen of an application (B) corresponding to the last selected application icon, and may substitute the execution screen of an application (E) 1310 corresponding to the newly selected application icon. In the opposite case, for example, the view screen that is providing an application execution screen corresponding to the first selected application icon may be selected, not the view screen that is providing an application execution screen corresponding to the last selected application icon. In this case, if the view screen that is providing an application execution screen corresponding to the first selected application icon is the main screen, the view screen that is providing an application execution screen corresponding to the next selected application icon may be selected.

In another embodiment, the display device 100 may randomly select any one of all view screens, and may substitute and provide the execution screen of an application (E) 1310 corresponding to the newly selected application icon, not the application (B) that was previously running on the selected view screen.

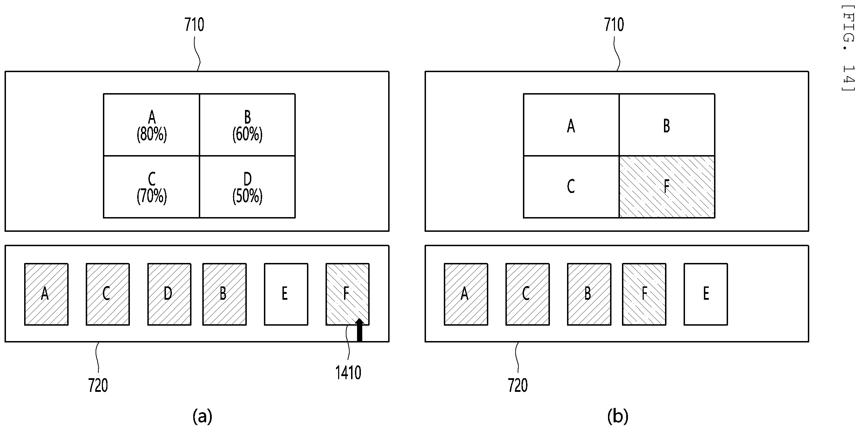

In Fig. 14, in the state of Fig. 13, the recommended combination probability of the application corresponding to the additionally selected application icon and the application that was previously selected and provided is calculated, and one view screen can be selected by referring to the recommended combination probability calculated in this way.

In Fig. 14 (a), the recommendation combination probability between the application running on each view screen and the application (F) 1410 corresponding to the additionally selected application icon is calculated.

In Fig. 14 (a), the recommended combination probability is calculated as 80% for the first view screen, 60% for the second view screen, 70% for the third view screen, and 50% for the fourth view screen.

At this time, referring to FIG. 14 (b), the display device 100 can select the view screen (the fourth view screen (D)) with the lowest recommended combination probability in FIG. 14 (a), and provide an application (F) (1410) corresponding to the additionally selected application icon as a replacement on the fourth view screen.

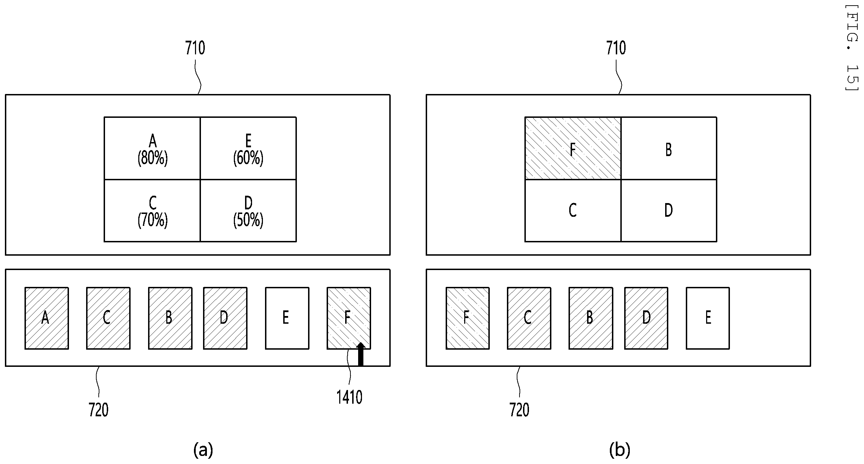

In FIG. 15, in the state of FIG. 13, the non-recommended combination probability of the application corresponding to the additionally selected application icon and the application that was previously selected and provided can be calculated, and one view screen can be selected by referring to the non-recommended combination probability calculated.

In Fig. 15 (a), the non-recommended combination probability between the application running on each view screen and the application (F) 1410 corresponding to the additionally selected application icon is calculated.

In Fig. 15 (a), the non-recommended combination probability was calculated as 80% for the first view screen, 60% for the second view screen, 70% for the third view screen, and 50% for the fourth view screen.

Therefore, referring to Fig. 15 (b), the display device 100 can select the view screen with the highest non-recommended combination probability (the first view screen (A)) in Fig. 15 (a), and can substitute provide the application (F) 1410 corresponding to the additionally selected application icon on the first view screen. Even if the first view screen in Fig. 15 is the main view screen, it can be substituted. Alternatively, if the view screen with the highest non-recommended combination probability is the main view screen, the view screen with the next highest non-recommended combination probability may be substituted and selected.

Meanwhile, in the above-described embodiments, the recommended/non-recommended combination probability can be calculated by considering characteristics such as application properties and types, for example. For example, if the currently running application is a game application, and if the additionally selected application is a game application, the recommendation/non-recommendation probability can be determined by referring to settings, usage history, currently viewing users, etc.

Or, in the above-described embodiments, the recommendation/non-recommendation combination probability can be calculated by considering, for example, the simultaneous execution possibility of the applications. Here, the simultaneous execution possibility can be determined by referring to at least one of the resource status of the display device 100, legal issues, copyright issues, importance of video/audio, etc. Meanwhile, in the above, the resource can include at least one of the video processor, buffer, memory, decoder performance, etc.

Or, in the above-described embodiments, the recommended/non-recommended combination probability may be calculated by considering, for example, the remaining playback end time of each application.

Or, in the above-described embodiments, the recommended/non-recommended combination probability may be calculated by considering, for example, the simultaneous execution possibility of the applications.

Or, in the above-described embodiments, the recommended/non-recommended combination probability may be calculated between the currently running applications, rather than between the currently running applications and the additionally selected applications, unlike the above-described embodiments.

Or, in the above-described embodiments, the recommended/non-recommended combination probability may be calculated between the application running on the main view screen and the applications running on the remaining view screens, rather than between the currently running applications and the additionally selected applications, unlike the above-described embodiments.

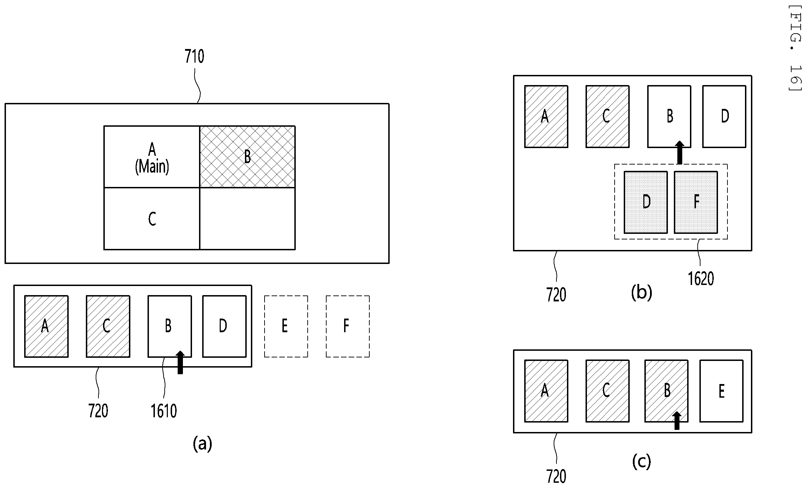

In Fig. 16, when a predetermined application icon is selected in the second area 720, an example is shown in which application icon(s) that can no longer be selected according to the selection are disabled, and the application list provided in the second area is rearranged.

Referring to Fig. 16 (a), the display device 100 is providing four view screens in the first area 710, and by selecting two application icons, A and C, the corresponding application execution screens are provided through the two view screens. At this time, if a new application icon (B) 1610 is selected by the user, the display device 100 can provide the application execution screen corresponding to the selected application icon on an empty view screen.

Meanwhile, when the multi-view mode is running, the display device 100 allocates an application execution screen corresponding to the selected application icon to a predetermined view screen when an application icon is selected in the second area 720, and determines whether there is an unselectable application in the application list provided in the second area 720 according to the remaining application(s) and the application allocated to the predetermined view screen. If there is an application that cannot be additionally selected as a result of the determination, the display device 100 can guide 1620 that the application cannot be additionally selected by disabling it as shown in FIG. 16 (b), and remove it from the list as shown in FIG. 16 (c), and rearrange the application list in the second area 720.

In another embodiment, the display device 100 may disable an application that cannot be additionally selected according to the selected application and may not rearrange the application list by removing it from the second area 720 as shown in FIG. 16 (c).

In another embodiment, the display device 100 may not guide the application that cannot be additionally selected according to the selected application to be disabled as in FIG. 16 (b), but may rearrange the application list by removing it from the second area 720 as in FIG. 16 (c).

In the above, the guide for the disabled application may be used in various ways other than the way shown in FIG. 16 (b). Such ways may include using audio, using a pop-up window, etc.

Meanwhile, the application icon that is disabled or/and removed from the list may be revived if the application execution screen that caused such a thing is terminated on the corresponding view screen.

In Fig. 16, the inability to select may be determined, for example, when the aforementioned recommended/non-recommended ratio is above a threshold or simultaneous execution is impossible.

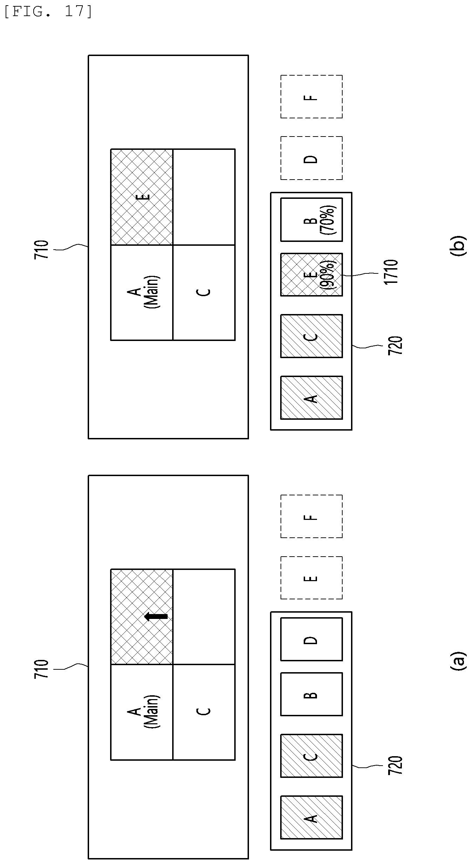

In Fig. 17 (a), when the user selects one of the view screens among the view screens provided in the first area 710 that does not provide an application execution screen instead of selecting a predetermined application icon in the second area 720, the display device 100 may calculate and provide a recommended/non-recommended ratio of an application icon that has not yet been selected in the application list of the second area 720. In the above, a view that is already being executed may also be selected.

Accordingly, as illustrated in FIG. 17 (b), when the display device 100 selects a predetermined application icon (E) 1710, the display device 100 may provide an application execution screen corresponding to the selected application icon directly on the corresponding view screen.

The selection of Fig. 17 (b) may be made manually by the user, but may also be automatically selected by the display device 100 based on the result of calculating the recommendation/non-recommended ratio.

Meanwhile, referring to Fig. 17 (b), in the second area 720, when providing an application list, not all application icons are exposed at once, and the list may be updated according to the user's control. Depending on the user's action of Fig. 17 (a), an application icon 1710 that was not exposed in Fig. 17 (a) may be exposed in Fig. 17 (b) with the sorting order changed so that information can be confirmed or selected.

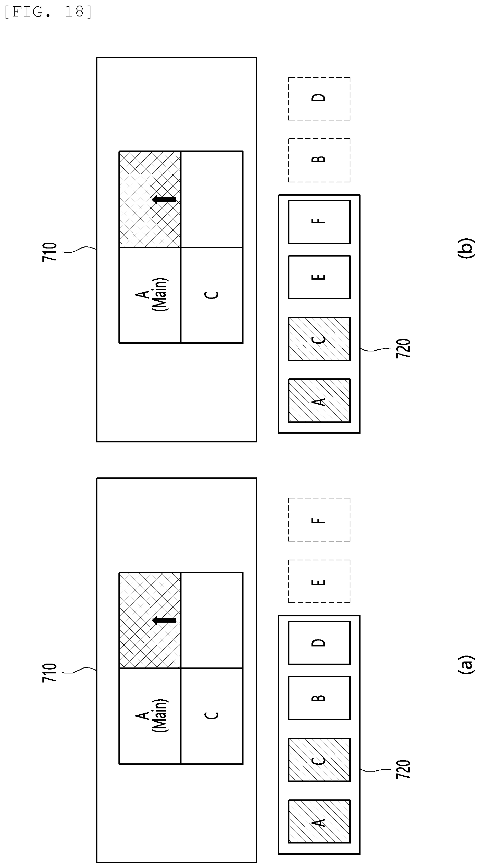

In Fig. 18 (a), a case is shown where the user does not select a predetermined application icon in the second area 720, but instead selects a predetermined view screen that provides an empty screen of the first area 710.

In this case, the display device 100 can rearrange the application list to expose application icons that are not currently exposed, as shown in FIG. 18 (b), since it appears that only the application icons that are difficult to select or unwanted from the list of currently exposed applications are exposed in the second area 720. At this time, the application icons to be exposed can be determined by referring to information of, for example, the third area 730 to the fourth area 740. Alternatively, the application icons to be exposed can be sequentially exposed in the order in which they were arranged in the application list.

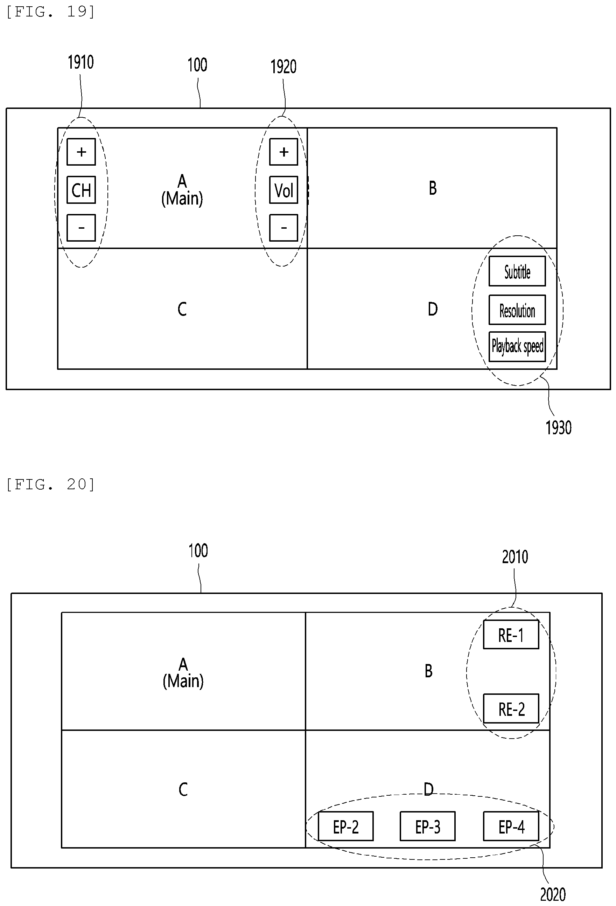

Figs. 19 and 20 are examples of user interfaces illustrated to explain control during operation of a multi-view mode (full screen) according to an embodiment of the present disclosure.

Figs. 19 and 20 explain a processing method when a user wants to perform some control while enjoying the multi-view mode in full screen after the multi-view mode setting is completed after Figs. 6 to 18 described above. In the above case, the display device 100 may return to any one of the states of Figs. 6 to 18.

However, Figs. 19 to 20 below describe a method of controlling in the current state. For convenience of explanation, it is described that an application A execution screen is provided on the first view screen, an application B execution screen is provided on the second view screen, an application C execution screen is provided on the third view screen, and an application D execution screen is provided on the fourth view screen. Here, for convenience of explanation, a multi-view screen composed of four view screens is exemplified, but the present disclosure is not limited thereto.

When the display device 100 receives a first signal through an input means, it may analyze the received first signal and provide a screen as shown in Figs. 19 and 20 without returning to any of the states of Figs. 6 to 18 as described above. This may be based on what is preset in the display device 100. For example, the settings may include, for example, channel change, volume adjustment, episode change, etc. In the case of episode change, the application is not changed, but only the internal content is changed. In this case, if something like series continuous play is not set or the user wants a specific episode, it may be inconvenient to return to the previous state and select it, so this can be a solution.

Fig. 19 explains the operation when the user does not want to change the application currently running on the display device 100 and wants to perform some control.

Referring to Fig. 19, the display device 100 may provide one of a channel change key button 1910, a volume adjustment key button 1920, etc. on the first view screen.

Referring to Fig. 19, the display device 100 may provide one of a subtitle selection button, a resolution change button, a playback speed change button 1930, etc. on the first view screen.

In addition, the display device 100 may provide a service to enable immediate desired control without screen switching by providing various keys or buttons on the corresponding view screen.

Meanwhile, referring to Fig. 20, the display device 100 may provide recommended application information (also possible as an icon) (RE-1, RE-2, etc.) 2010 on the second view screen.

Referring to Fig. 20, the display device 100 may provide other episode information (also possible as an icon) 2020 other than the current episode on the fourth view screen to immediately select a desired episode and provide services such as immediate playback and viewing reservation.

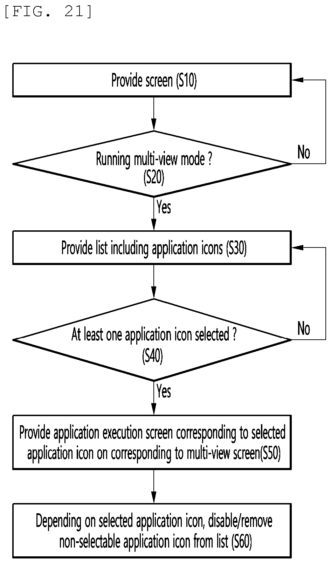

Fig. 21 is a flowchart illustrating an operation method of the display device according to an embodiment of the present disclosure.

In step S10, the display device 100 may provide a screen through the display. At this time, the screen may be an application execution screen.

In step S20, the display device 100 may determine whether a multi-view mode execution request has been received. This may be performed by an input means including the remote control device 200 illustrated in Figs. 2 to 4. Alternatively, the multi-view mode execution request may be made using a menu or setting button provided on the display device 100.

In step S30, if it is determined that a multi-view mode execution request has been received, the display device 100 may provide a list including application icons.

In step S30, the contents of Figs. 6 to 18 described above may be referred to.

In step S40, the display device 100 may determine whether at least one application icon is selected from the provided list.

In step S50, if it is determined that at least one application icon is selected from the provided list, the display device 100 may provide an execution screen of an application corresponding to the selected application icon on the corresponding multi-view screen.

Meanwhile, in step S60, the display device 100 may check an unselectable application icon according to the selected application (or application icon) and control the checked unselectable application icon to be disabled or/and removed from the list.

In the above-described specification, the application list provided in the second area 720 can be configured so that, for example, when one application icon is selected, the icons of neighboring applications can be configured to be disabled, and/or applications that have a relatively lower probability of being removed from the list than other applications can be placed next to each other. By doing so, the inconvenience of the user selecting additional application icons due to the disabling of neighboring applications or the rearrangement of the application list according to the selection of one application icon can be minimized.

Alternatively, when one application icon is selected in the application list arranged and provided in the second area 720 in the above-described specification, the icons of neighboring applications can be configured to be disabled, and/or applications that have a relatively lower probability of being removed from the list than other applications can be rearranged to be placed next to each other.

Even if not specifically mentioned in the above-described specification, selection may also include cases of pointing.

Even if not specifically mentioned, the order of at least some of the operations disclosed in the present disclosure may be performed simultaneously or in a different order from the described order, or some may be omitted/added.

According to one embodiment of the present disclosure, the above-described method can be implemented as a code that can be read by a processor in a medium in which a program is recorded. Examples of the medium that can be read by a processor include a ROM, a RAM, a CD-ROM, a magnetic tape, a floppy disk, an optical data storage device, etc.

The display device described above is not limited to the configuration and method of the embodiments described above, and the embodiments may be configured by selectively combining all or some of the embodiments so that various modifications can be made.

## Claims

1. A display device (100), comprising:
a memory (140);
a display (180) configured to provide a screen; and
a processor (170) configured to:
when a multi-view mode providing n (where n is a natural number) view screens on the screen is executed, a first list including application icons executable in each view screen is provided in one area of the screen, and
when a first application icon is selected in the first list, at least one application icon that is not selected in the first list is disabled or removed according to a selection of the first application icon.

2. The display device of claim 1, wherein the processor (170) configured to:
when the first application icon is selected from the first list, control the display (180) to provide an application execution screen corresponding to the first application icon on a first view screen.

3. The display device of claim 2, wherein the processor (170) configured to:
control the display (180) to provide guide information for at least one application icon that is disabled or removed from the first list in an area on the screen.

4. The display device of claim 3, wherein the processor (170) configured to:
disable or remove an application icon corresponding to an application that cannot be executed simultaneously with an application corresponding to the first application icon among at least one application icon that is not selected in the first list according to the selection of the first application icon.

5. The display device of claim 3, wherein the processor (170) configured to:
group at least one application to be disabled or removed from the first list,
disable and display the application icon corresponding to the grouped application around the first application icon, and remove the application icon corresponding to the grouped application from the first list.

6. The display device of claim 3, wherein the processor (170) configured to:
if at least one application to be disabled or removed from the first list is an application that was not displayed on the screen, remove after displaying around the first application icon the application icon corresponding to the application to be disabled or removed.

7. The display device of claim 1, wherein the processor (170) configured to:
when a selection signal is received for one of the view screens that does not provide a current application execution screen among the n view screens provided on the screen, at least one application icon among the application icons that are not selected in the first list is provided for selection.

8. The display device of claim 1, wherein the processor (170) configured to:
when a selection signal is received for one of the view screens that does not provide a current application execution screen among the n view screens provided on the screen, at least one application icon among the application icons that are not selected in the first list is disabled or removed, and
reconfigure the first list.

9. The display device of claim 1, wherein the processor (170) configured to:
when a selection signal is received for one of the view screens that does not provide a current application execution screen among the n view screens provided on the screen, display a recommendation probability of the application icons that are not selected in the first list.

10. The display device of claim 1, wherein the processor (170) configured to:
if the first application icon is reselected from the first list in a state where the application execution screen corresponding to the first application icon is provided through the first view screen, stop provision of the application execution screen corresponding to the first application icon on the first view screen by determining that the first application icon is deselected.

11. The display device of claim 1, wherein the processor (170) configured to:
display application icons to be disabled or removed among the unselected application icons are displayed around the first application icon according to the selection of the first application icon when the first application icon is pointed at in the first list, and
display an application execution screen corresponding to the first application icon on the first view screen when the pointed first application icon is selected.

12. The display device of claim 1, wherein the processor (170) configured to:
display at least one of a function button and an information providing button within the first view screen.

13. The display device of claim 1, wherein the processor (170) configured to:
arrange application icons whose recommended combination probability is greater than a threshold value in the first list, adjacent to each other, when forming the first list including a plurality of application icons.

14. The display device of claim 1, wherein the processor (170) configured to:
further provide at least one of a second list including combinations of recommended application icons and a third list including combinations of applications that were combined during a previous multi-view mode execution, when the multi-view mode is executed.

15. An operating method of display device (100), comprising:
providing a screen (S10);
providing a list including at least one application icon, when a multi-view mode is executed (S30);
providing an application execution screen corresponding to the application icon selected from the list (S50); and
when an application icon is selected from the list, disabling or removing at least one of the application icons that are not currently executed according to the selection of the application icon from the list (S60).
